Europäisches Patentamt

European Patent Office

Office européen des brevets

(19)

(11) Numéro de publication : **0 188 487**
**B1**

(12) **FASCICULE DE BREVET EUROPÉEN**

(45) Date de publication du fascicule du brevet :
**11.01.89**

(21) Numéro de dépôt : **85903307.8**

(22) Date de dépôt : **15.07.85**

(86) Numéro de dépôt international :
**PCT/FR 85/00193**

(87) Numéro de publication internationale :
**WO/8600683 (30.01.86 Gazette 86/03)**

(51) Int. Cl.⁴ : **F 16 L   9/22, E 21 D  11/08,
E 03 F   3/04, E 02 D  29/04**

(54) CONDUIT ENTERRE DE GRANDE SECTION.

(30) Priorité : 13.07.84 FR 8411173
05.11.84 FR 8416811

(43) Date de publication de la demande :
30.07.86 Bulletin 86/31

(45) Mention de la délivrance du brevet :
11.01.89 Bulletin 89/02

(84) Etats contractants désignés :
AT BE CH DE FR GB IT LI LU NL SE

(56) Documents cités :
AU--D-- 4 264 668
DE--A-- 2 461 863
DE--B-- 1 035 597
FR--A--   935 451
FR--A-- 1 008 441
FR--A-- 2 315 655
FR--A-- 2 379 653
GB--A--   675 616

(73) Titulaire : **Matiere, Marcel
17, avenue Aristide Briand
F-15000 Aurillac (FR)**

(72) Inventeur : **Matiere, Marcel
17, avenue Aristide Briand
F-15000 Aurillac (FR)**

(74) Mandataire : **Phélip, Bruno et al
c/o Cabinet Harlé & Phélip 21, rue de La Rochefoucauld
F-75009 Paris (FR)**

Jouve, 18, rue St-Denis, 75001 Paris, France

## Description

La présente invention a pour objet un conduit enterré de grande dimension, notamment en section transversale, celle-ci pouvant, par exemple, être de plusieurs mètres carrés.

Depuis fort longtemps, on réalise des conduits enterrés en maçonnerie, en béton, ou en tôle, mais, généralement, ces conduits, destinés par exemple à des réseaux d'assainissement, étaient de dimension relativement réduite, généralement inférieure à 1 m².

Le document FR-A-2.379.653, par exemple, décrit un conduit en béton armé pour la protection de câbles, constitué de deux éléments superposés en forme de U comprenant un fond plat et deux ailes verticales qui s'appuient l'un sur l'autre le long de joints longitudinaux à rainure et languette.

Cette disposition est prévue seulement pour réaliser des caniveaux recouverts simplement d'une épaisseur de quelques centimètres pour poser le revêtement du trottoir.

Cependant, on doit parfois réaliser des conduits enterrés de plus grande dimension, pouvant atteindre plusieurs mètres carrés en section transversale, par exemple pour faire passer une rivière ou une voie de circulation sous un remblai d'autoroute, ou bien pour réaliser des égouts ou des canaux de grand débit, de nombreuses applications pouvant être envisagées. Le plus souvent, ces conduits sont réalisés en maçonnerie ou en béton coulé sur place.

A cet effet, la société déposante a déjà proposé un conduit de grande dimension décrit dans la demande de brevet européen EP-A-81402. Ce conduit, constitué de plusieurs éléments cylindriques associés, réalisé normalement en béton armé, est assez rigide pour résister aux efforts transmis par le remblai ou par le fluide circulant éventuellement sous pression à l'intérieur.

Mais il peut être avantageux, dans la réalisation des conduits enterrés, d'utiliser des structures semi-rigides ou même relativement flexibles dans lesquelles, grâce à une légère déformation du conduit sous l'action des charges qu'il supporte, il est possible de soulager la partie supérieure de la voûte en transmettant partiellement les efforts aux parties latérales qui s'appuient sur le terrain adjacent. Jusqu'à présent, de tels conduits flexibles étaient réalisés en tôle métallique, généralement ondulée. Or, pour des ouvrages destinés à être en service de nombreuses années, une tôle métallique peut ne pas présenter une résistance à la corrosion suffisante et, en outre, dans le cas de conduits de circulation liquide, les ondulations nécessaires pour renforcer la résistance mécanique de la paroi diminuent les performances d'écoulement du fluide. C'est pourquoi il est intéressant, notamment pour les conduits de grande dimension, d'utiliser une construction en béton armé.

Dans le document DE-A-2.461.863, on décrit un conduit enterré en béton armé constitué de trois éléments, respectivement, un fond et deux parois latérales, articulés les uns sur les autres pour reconstituer une section circulaire, les articulations étant placées l'une à la clé et les deux autres, de part et d'autre du plan médian. Une telle construction présente une certaine possibilité de déformation mais également un risque de glissement des articulations. En outre, dans le cas de conduits de grande dimension, la pose des divers éléments du conduit peut être assez difficile.

L'invention a pour objet un nouveau type de conduit préfabriqué qui, tout en présentant une souplesse comparable à celle des conduits métalliques, présente l'avantage de pouvoir être réalisée en béton armé, et cependant d'être facile à poser, même en grande dimension.

Un tel conduit, selon l'invention, est constitué, en section transversale, de deux éléments superposés, respectivement un élément inférieur comprenant un radier à fond plan relevé sur ses bords par deux parois latérales sensiblement verticales, et un élément supérieur de recouvrement, s'appuyant sur la partie supérieure des parois latérales de l'élément inférieur, par l'intermédiaire d'appuis longitudinaux ménagés le long de bords rectilignes adjacents des deux éléments et placés dans un plan de joint parallèle au fond du radier, lesdits appuis longitudinaux étant réalisés de façon à constituer chacun une articulation.

Conformément à l'invention, l'élément supérieur constitue une voûte cintrée réalisée de façon à présenter une souplesse suffisante pour se déformer légèrement sous l'action des efforts supportés et l'élément inférieur est réalisé de façon à résister sans déformation aux efforts transmis par le terrain et par l'élément supérieur, les deux éléments étant fixés l'un à l'autre par des moyens de maintien exerçant des efforts de serrage dirigés, le long de chaque articulation, suivant des directions sensiblement verticales de façon à permettre un léger pivotement sans glissement des parties d'appui de l'élément supérieur déformable par rapport à l'élément inférieur indéformable.

Selon une caractéristique préférentielle, les articulations à rotule sont constituées par deux rainures à fond courbe, ménagées le long des extrémités supérieures des parois latérales de l'élément inférieur et dans lesquelles viennent se poser les bords latéraux de l'élément supérieur, ces derniers ayant un profil arrondi de rayon de courbure légèrement plus faible que celui du fond de la rainure.

Dans un mode de réalisation particulièrement avantageux, les efforts d'appui de l'élément supérieur sur l'élément inférieur sont dirigés le long de chaque articulation longitudinale, suivant deux plans sensiblement verticaux, et les deux éléments sont fixés l'un à l'autre par des moyens de maintien exerçant des efforts de serrage parallèles aux efforts d'appui. Comme indiqué, l'élément inférieur doit être assez rigide pour résister notamment aux efforts horizontaux résultant de la déformation de la voûte supérieure en tenant compte de la hauteur des parois latérales qui peut être relativement importante. En effet il est avantageux et économique de donner aux parois latérales de l'élément inférieur une hauteur variable que l'on peut choisir en fonction de la section d'écoulement à assurer. On notera d'ailleurs, qu'en raison de sa forme sensiblement rectangulaire à fond plat, cette section donne les meilleurs débits d'écoulement.

Pour la pose du conduit, on procédera avantageusement de la façon suivante :

Après avoir réalisé une tranchée et dressé le fond plan de celle-ci au niveau voulu, on pose tout d'abord l'élément inférieur puis, très rapidement, on le recouvre par l'élément supérieur en forme de voûte dont les bords viennent se placer dans les rainures de l'élément supérieur. Cette opération ne nécessite aucun étayage et est donc assez rapide, le temps de montage pouvant être inférieur au temps de décompression du terrain, ce qui permet d'éviter le blindage de la fouille, toujours long et onéreux. Dans ce cas, les parois latérales de l'élément intérieur constituent une protection provisoire particulièrement intéressante contre les petits éboulements qui peuvent se produire au fond de la fouille. En outre, le radier a un fond plan de largeur maximale, ce qui lui donne une parfaite assise au sol.

Par ailleurs, lorsque le conduit est destiné au passage d'un égout ou d'une rivière, on doit généralement le calculer non pas, pour un débit moyen, mais pour un débit maximal, par exemple en cas de crue. Il est alors avantageux de donner aux parois latérales une hauteur suffisante pour que leurs faces supérieures, sur lesquelles sont ménagées les appuis longitudinaux, se trouvent au-dessus du niveau du liquide pour un débit moyen. Les joints sont ainsi protégés dans la plupart des circonstances et l'élément inférieur, dont la hauteur est déterminée pour que la section de passage corresponde au débit moyen, peut être recouvert d'une peau de protection en matière synthétique ou métal, choisie en fonction des conditions d'utilisation.

Il est particulièrement avantageux de donner aux faces internes des parois latérales de l'élément inférieur et des parties latérales d'appui de l'élément supérieur la forme d'un secteur cylindrique circulaire centré dans le plan de joint. De la sorte, on assure la continuité de courbure du conduit, propice à un bon écoulement, et en même temps, on ménage un élargissement progressif vers le bas des parois latérales de l'élément inférieur qui augmente la résistance de celles-ci au renversement, notamment en permettant la pose d'un ferraillage calculé en conséquence.

Comme on l'a indiqué, pour assurer un pivotement sans glissement des parties en appui, mais également pour résister éventuellement à une pression interne, les deux éléments sont reliés, l'un à l'autre par des moyens de maintien qui peuvent avantageusement être constitués par une série de tiges de serrage placées dans un plan sensiblement vertical, passant au centre de l'articulation à rotule.

. Mais les moyens de maintien des deux éléments peuvent également être constitués par une série de ceintures de serrage placées dans des plans transversaux à l'axe répartis sur la longueur des éléments et formant dans chaque plan transversal une boucle fermée entourant complètement l'ensemble des deux éléments.

Dans un mode de réalisation plus perfectionné, le conduit étant constitué d'une série de segments individuels placés les uns à la suite des autres et comprenant chacun un élément inférieur et un élément supérieur superposés, le radier de chaque segment est muni, dans le plan de joint, d'un prolongement passant au-dessous de la partie adjacente du radier du segment suivant qui vient ainsi se poser sur le prolongement adjacent. Ce dernier comprend une face inférieure plane parallèle à la face inférieure du radier adjacent et se raccordant par des faces arrondies aux faces externes des parois latérales. De la sorte, les extrémités adjacentes des deux segments sont recouvertes par un joint d'étanchéité en forme de ruban continu et dont la partie inférieure passe entre les faces, respectivement supérieure et inférieure du prolongement et du radier adjacent et l'on peut recouvrir le joint d'étanchéité par une cerce en forme de profilé de même largeur passant au-dessous du prolongement et mise en tension de façon à appliquer sous pression le joint d'étanchéité contre les parois du conduit. A cet effet, on peut utiliser au moins un câble de serrage passant sur la face externe de la cerce et dont les extrémités se rejoignent, dans le plan médian du conduit, sur un dispositif d'ancrage placé au-dessus de la clé de l'élément supérieur et muni de moyens de mise en tension du câble sous une tension de pré-contrainte susceptible de résister à un effort d'ouverture des articulations longitudinales sous l'effet des sollicitations exercées sur le conduit en service.

Dans un autre mode de réalisation, les moyens de maintien des deux éléments sont constitués par au moins un câble de serrage enroulé en spirale autour du segment de conduit formé par la réunion des deux éléments et sur toute leur longueur, ce câble pouvant être enroulé sur les faces externes du conduit ou bien passé dans un conduit tubulaire, enroulé en spirale et dont chaque spire comprend deux parties ménagées dans l'épaisseur de la paroi respectivement de l'élément supérieur et de l'élément inférieur, et dont les orifices de sortie sont répartis le long des bords latéraux des deux éléments, de façon à venir deux à deux en coïncidence à la pose de l'élément supérieur sur l'élément inférieur.

L'invention sera mieux comprise par la description détaillée, non limitative, d'une forme de réalisation particulière de conduit de grande dimension, conforme à l'invention, en référence aux dessins annexés, dans lesquels :

— la Fig. 1 est une vue de voûte d'un conduit de grande dimension, selon l'invention ;

— la Fig. 2 est une vue en coupe transversale du conduit selon la ligne II-II de la Fig. 1 ;

— la Fig. 3 est une vue en coupe transversale partielle de la liaison entre les deux éléments du conduit, dans un autre mode de réalisation de l'articulation ;

— la Fig. 4 est une coupe agrandie de l'articulation à rotule.

— la Fig. 5 est une vue de côté de la liaison entre trois segments de conduit consécutifs ;

— la Fig. 6 est une vue en coupe transversale, selon la ligne VI-VI de la Fig. 5 ;

— la Fig. 7 est une vue de détail, en coupe transversale, du joint et de sa cerce d'application.

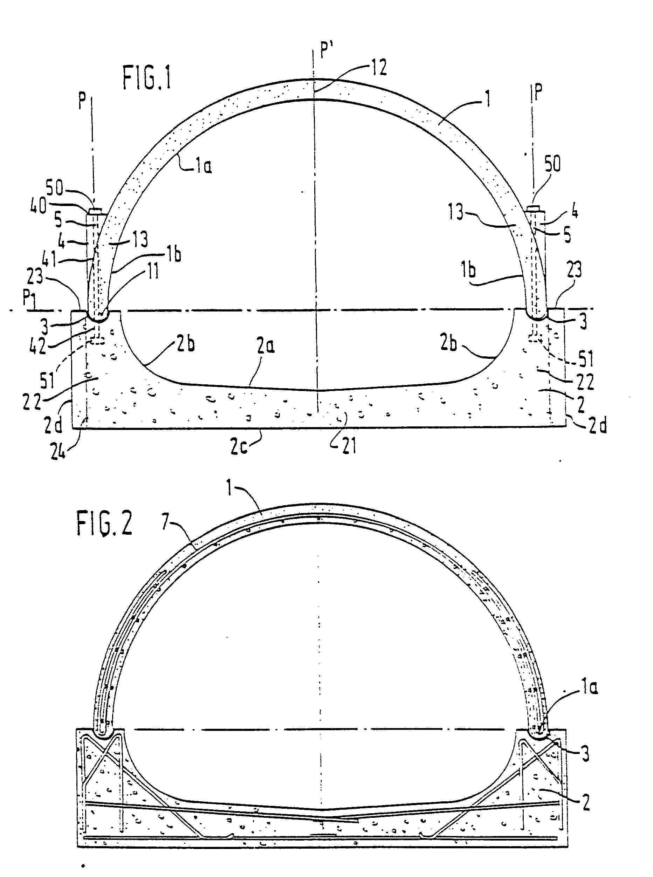

Le conduit selon l'invention est constitué, de façon classique, d'une série de segments consécutifs comprenant chacun, comme on l'a représenté en coupe transversale sur la Fig. 1, un élément supérieur 1 et un élément inférieur 2.

L'élément supérieur 1 est cintré en forme de voûte, de préférence de section demi-circulaire. Il est posé sur l'élément inférieur 2, par l'intermédiaire d'appuis longitudinaux 3 qui, selon une caractéristique essentielle de l'invention, sont réalisés de façon à constituer des articulations à rotule susceptibles de pivoter légèrement autour d'un plan d'appui vertical P. A cet effet, l'élément inférieur 2 est muni de deux rainures longitudinales à fond courbe 3 formant des gouttières semi-cylindriques sur lesquelles peuvent venir se poser les bords latéraux 11 de l'élément supérieur 1, ces derniers ayant un profil arrondi de rayon de courbure légèrement plus faible que celui du fond de la rainure 3.

Selon l'une des caractéristiques principales de l'invention, la voûte 1 est réalisée de façon à présenter une souplesse suffisante pour se déformer légèrement sous l'action des efforts supportés. On indiquera par la suite plusieurs modes de réalisation de voûte permettant d'obtenir la souplesse désirée.

En revanche, l'élément inférieur 2 est réalisé de façon à résister sans déformation aux efforts transmis par le terrain et par l'élément supérieur de voûte 1.

Comme on l'a représenté sur les dessins, l'élément inférieur 2 est constitué avantageusement d'un radier 21 à fond plan 2c, relevé sur ses bords par deux parois latérales 22 dont les faces externes 2d sont sensiblement verticales et dont les faces supérieures 23 ont une épaisseur sensiblement plus importante que celle de l'élément de voûte 1. La face interne du radier comprend une partie centrale 2a sensiblement horizontale ou de préférence, dans le cas de réalisation d'un conduit de circulation d'eau, légèrement incurvée de façon à présenter un point bas dans le plan médian du conduit. Sur ses deux côtés, la partie centrale 2a est relevée par deux faces incurvées 2b qui constituent les faces internes des parois latérales 22. De préférence, les faces internes 2b ont la forme de secteurs cylindriques centrés dans le plan de joint P1 passant par les faces supérieures 23 de l'élément 2 et dans lequel sont centrées également au moins les parties d'appui 1b de la face interne 1a de l'élément supérieur 1, cette dernière étant, généralement, constituée d'un secteur cylindrique centré dans le plan P. De la sorte, on assure une continuité de la courbure tout au long du conduit, propice à un bon écoulement du fluide. Cependant, en élargissant ainsi la base des parois latérales 22 de l'élément inférieur 2, on facilite l'encaissement sans déformation des efforts horizontaux en permettant notamment l'implantation d'un ferraillage adapté, comme on l'a représenté sur la Fig. 2.

Divers moyens peuvent être employés pour donner à la voûte 1 la souplesse nécessaire, la conception selon l'invention ayant notamment été permise par les progrès effectués dans les modes de calcul et la réalisation des ouvrages en béton armé et dans la connaissance du comportement d'un remblai.

On pourra en particulier réaliser la voûte en béton armé de la façon représentée sur la Fig. 2, le ferraillage comprenant des cerces demi-cylindriques 7 recourbées en épingle à leurs deux extrémités, de façon à constituer une nappe de ferraillage dans la partie médiane 12 et deux nappes dans les parties latérales 13. On réaliserait ainsi simplement une augmentation de résistance des parties latérales plus chargées, la voûte ayant tendance à s'ovaliser sous l'action des charges transmises par le remblai, de telle sorte que la partie centrale 12 soit soulagée, la voûte s'appuyant sur les terres vers l'extérieur par ses côtés 13.

Cette légère déformation de la voûte 1 se traduit par un petit pivotement des articulations 11 autour du plan P et, pour maintenir la continuité du conduit et éviter le risque de glissement des articulations, celles-ci sont fixées par des moyens de maintien 5 qui, dans l'exemple représenté sur la Fig. 1, sont constitués par de simples tiges en forme de boulons 5 qui passent dans des orifices ménagés le long des plans verticaux P dans des bossages 4 placés de part et d'autre de la voûte 1 et qui se prolongent dans les parties latérales 22 du radier par des trous borgnes 42. Les boulons 5 sont munis à leur extrémité supérieure d'une tête 50 d'appui sur les bossages 4 et leur extrémité filetée se visse sur des écrous 51 placés au fond des trous borgnes 42, ceux-ci pouvant également être simplement munis d'un filetage intérieur.

Les tiges de maintien 5 sont placées dans les plans verticaux P passant dans le fond des rainures 3 et sont donc dirigées sensiblement suivant la même direction que les efforts d'appui de l'élément supérieur 1 sur l'élément inférieur 2, en particulier lorsque l'élément supérieur 1 a la forme d'une voûte semi-cylindrique. On réalise ainsi un appui pivotant sans risque de glissement de la voûte 1 sur l'élément inférieur indéformable 2.

Le calcul de la voûte permet, de façon connue, de déterminer un point d'inversion d'effort, se situant sensiblement à mi-hauteur de la voûte et c'est jusqu'à ce point que sera prolongée la double nappe de ferraillage. Dans l'exemple représenté, la voûte a une épaisseur constante, mais on pourrait également, à partir du point d'inversion d'effort, diminuer progressivement l'épaisseur de la voûte jusque dans le plan médian P' de façon à augmenter la souplesse de la partie centrale 12.

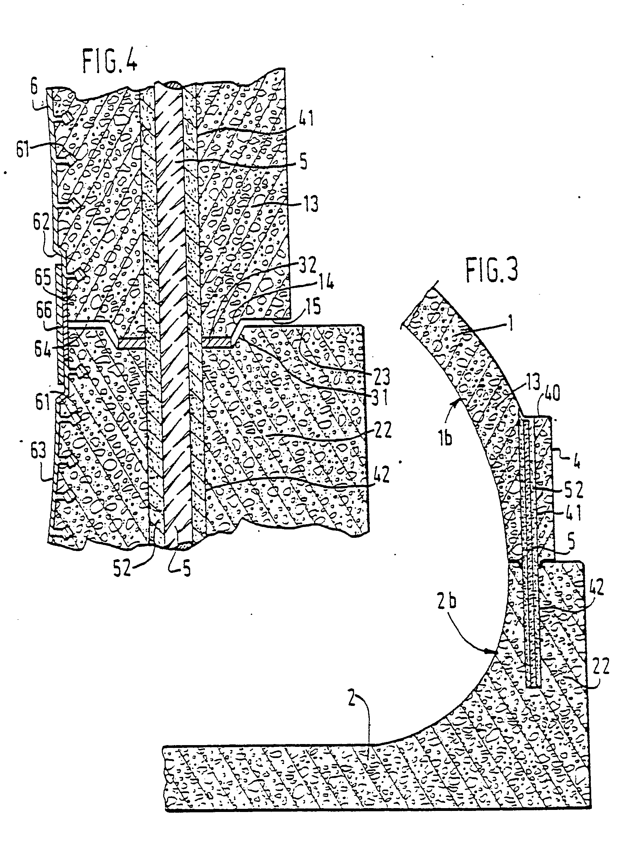

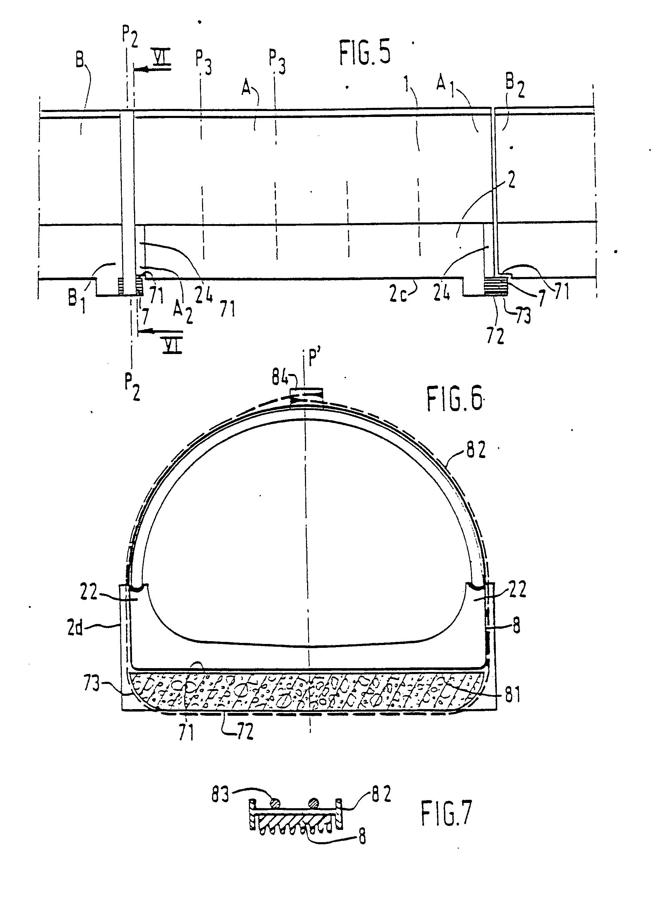

Dans un autre mode de réalisation avantageux, représenté sur les Fig. 3 et 4, chaque tige de maintien 5 est constituée d'une tige métallique munie d'aspérités comme un fer à béton. Chaque tige pénètre avec jeu dans deux trous alignés, respectivement un trou traversant 41 ménagé dans le bossage 4 placé, comme précédemment, contre la partie latérale 13 de l'élément supérieur 1 et dans un trou borgne 42 ménagé dans la paroi latérale 22 de l'élément inférieur 2.

Comme les boulons décrits précédemment, les tiges métalliques peuvent être placées facilement de l'extérieur et à partir du haut, après pose de la voûte 1 sur le radier 2. Les tiges sont centrées dans leur trou par des écarteurs classiques et les trous 41 et 42 sont remplis, après la pose des tiges, d'un produit de liaison coulable tel qu'une colle ou un mortier.

Sur la Fig. 4, on a représenté une variante de réalisation de l'articulation à rotule. Dans ce cas, l'extrémité 11 de l'élément de voûte 1 est munie d'une nervure 14 à section trapézoïdale qui s'engage avec jeu dans une saignée 31 de plus grande section ménagée au centre de la face supérieure 23 de la paroi latérale 22 de l'élément inférieur 2. Les faces en regard de la nervure 14 et de la saignée 31 ont une largeur relativement faible, par exemple inférieure à la moitié de l'épaisseur de la voûte 1 et l'on interpose entre elles un joint 32 en élastomère. De part et d'autre de la nervure 14, les faces d'extrémité 15 de la voûte sont écartées de la face supérieure 23 de l'élément inférieur 2 par un jeu qui permet un léger pivotement de l'articulation autour du plan d'appui P. L'articulation se comporte donc comme une articulation pivotante cylindrique.

L'étanchéité du conduit peut être réalisée de l'intérieur, notamment lorsque le conduit est destiné à transporter un liquide sous pression. Une telle étanchéité a été représentée, à titre d'exemple, sur la Fig. 4.

Les faces internes des deux éléments 1 et 2 sont garnies d'une tôle métallique d'étanchéité 6, avantageusement munie sur sa face tournée vers le béton, d'aspérités 61 destinées à être noyées dans le béton pour assurer l'ancrage de la tôle 6, cette dernière ayant été mise en place à la coulée de l'élément pour servir de coffrage perdu.

Dans l'exemple représenté, on a cherché à réaliser une parfaite continuité de la courbure de la face interne du conduit. A cet effet, la surface interne de la tôle 6 présente une partie légèrement déprimée 62 et s'arrête à une certaine distance de l'extrémité 11 de la paroi 1. Il en est de même de la tôle 63 qui recouvre la face interne de l'élément inférieur 2.

Une tôle servant de couvre-joint 64 est placée dans le prolongement des extrémités des deux tôles 6 et 63 mais est écartée de celles-ci par un jeu 65. L'ensemble est recouvert par une plaque de polychlorure de vinyle souple 66 qui réalise une étanchéité continue, tout en permettant un léger pivotement de l'élément supérieur 1 par rapport à l'élément inférieur 2.

Comme on l'a représenté sur la Fig. 5, le conduit est constitué d'une série de segments placés les uns à la suite des autres et accolés suivant des plans de joint verticaux P2.

L'étanchéité entre les segments dans le plan de joint P2 peut être réalisée de l'intérieur, d'une façon analogue à celle qui vient d'être décrite pour le joint horizontal entre l'élément supérieur et l'élément inférieur de chaque segment. Cependant, on utilisera de préférence, la disposition représentée sur les Fig. 5 et suivantes qui présente l'avantage de pouvoir être réalisée à partir de l'extérieur du conduit.

Dans ce mode de réalisation, chaque élément inférieur 2 de chaque élément A est muni, à l'une de ses extrémités A1, d'un prolongement 7 comprenant une face supérieure plane 71 placée dans le prolongement de la face inférieure 2c du radier. De la sorte, à la construction du conduit, lorsque l'on met en place l'élément A à la suite d'un élément B déjà construit, l'extrémité A2 du radier placée du côté adjacent à l'élément B, vient se poser sur la face d'appui 71 du prolongement 7 de l'élément B. L'autre extrémité A1 du segment A étant munie d'un prolongement 7 qui supporte à son tour le segment suivant C.

Sur la Fig. 6, qui est une vue de bout en coupe par un plan VI-VI, légèrement décalé par rapport au plan de joint P2, on a représenté la disposition du joint placé sur l'extérieur du conduit.

Dans ce cas, le joint d'étanchéité à la forme d'un ruban continu en matière synthétique ou en caoutchouc entourant par l'extérieur, les extrémités adjacentes des éléments supérieurs 1 et des faces externes 2d des parois latérales des éléments inférieurs des deux segments consécutifs A et B. Le même ruban passe entre les faces en regard 2c et 71 de l'extrémité de jonction A2 de l'élément A et du prolongement 7 de l'élément B, de façon à être écrasé entre lesdites faces à la pose de l'élément A. Bien entendu, dans cette partie le joint a une largeur inférieure à celle de la partie supérieure qui recouvre les deux éléments et, après la pose, il peut être complété par un joint au mastic assurant la liaison avec l'extrémité P1 du segment B.

La face inférieure du prolongement 7 comprend une partie centrale 72 parallèle à la face supérieure 71 et qui se raccorde par des faces arrondies 73 aux faces latérales externes 2d de l'élément inférieur 2. Généralement, comme on l'a représenté sur les figures, on donne aux parois latérales 22 de l'élément inférieur 2 une largeur supérieure à celle de l'élément de voûte 1, pour obtenir une rigidité suffisante. Dans ce cas, l'élément inférieur 2 de chaque segment est muni à ses deux extrémités de faces verticales en retrait 24 qui se trouvent dans le prolongement de la face externe de l'élément de voûte. Ainsi, comme on le voit sur la Fig. 6, on réalise une surface externe sans discontinuité de courbure sur laquelle peut être placée une cerce 82 d'application du joint contre la paroi externe du conduit.

Comme on l'a représenté sur la Fig. 7, le joint 8 peut avantageusement être constitué par un joint à peigne comprenant des nervures susceptibles de s'écraser contre la paroi du conduit. Vers l'extérieur, la cerce d'application 82 peut être un profilé métallique à section en U ou en H permettant d'une part, de maintenir latéralement le joint 8 en laissant une possibilité d'écrasement et d'autre part, de maintenir vers l'extérieur des câbles de serrage 83.

Grâce à la forme arrondie donnée à la face externe du prolongement 7, la cerce 82 peut en effet être mise en tension de façon à écraser le joint en ruban 8. De ce fait, on pourrait éventuellement placer d'autres cerces dans des plans P3 perpendiculaires à l'axe, régulièrement répartis le long du segment A et servant alors de moyens de maintien des deux éléments serrés l'un sur l'autre pour remplacer les tiges 5 précédemment décrites. Bien entendu, les cerces placées sur l'intérieur du segment ne seraient pas associées à un joint d'étanchéité alors inutile et rempliraient seulement le rôle de frette.

Chaque cerce passerait au-dessous de l'élément inférieur 2 et ses extrémités se rejoindraient sur un moyen d'attache et de mise en tension 84 placé sur la partie supérieure de l'élément de voûte 1, dans le plan médian du conduit. Si le conduit n'est pas destiné à supporter une pression interne, l'utilisation de cerces simplement tendues pourra être suffisante. Cependant, généralement, le conduit est destiné à la circulation de fluide qui peut être placé sous pression. C'est pourquoi il est avantageux d'associer aux cerces 82 des câbles de précontrainte 83 placés sous une tension suffisante pour résister aux efforts d'ouverture des articulations 3 sous l'effet des sollicitations exercées sur le conduit en service. Ces câbles 83 sont placés, comme on l'a représenté sur la Fig. 7, sur la face externe de la cerce 82 et leurs extrémités se rejoignent sur un moyen d'ancrage et de mise en tension 84 placé sur l'extérieur à la clé de la voûte. Cette disposition peut être utilisée aussi bien dans le plan de joint P2 que dans les plans intermédiaires P3 dans lesquels la cerce associée aux câbles de précontrainte sert uniquement de frette, sans interposition de joint.

Selon la tension de précontrainte des câbles 83, on pourra utiliser différents moyens d'ancrage et de mise en tension connus par exemple pour la fabrication de béton précontraint. Par exemple, l'une des cerces pourrait être munie d'une plaque d'appui placée dans le plan médian et sur laquelle seraient fixées les extrémités des câbles soumises à des tractions en sens opposés, l'une des extrémités étant munie par exemple d'un système de blocage à coin permettant le blocage après mise en tension par un vérin.

L'étanchéité le long des appuis longitudinaux peut être assurée, comme précédemment, par un joint en caoutchouc ou en néoprène interposé entre l'extrémité 11 de la voûte et le fond de la rainure 3, des cordons de mastic placés après la pose permettant d'assurer la continuité de l'étanchéité le long des plans de joint P1 et P2.

Pour réaliser la voûte souple selon l'invention, il pourra être avantageux d'utiliser des types de béton particuliers comme par exemple des bétons de résine ou bien des bétons de fibre dans lesquels les armatures sont remplacées par des fibres métalliques de petite taille, noyées à l'intérieur du béton. On pourrait avantageusement, de la sorte, réaliser une voûte qui soit à la fois légère, résistante et souple, notamment dans sa partie centrale. D'une façon générale, la voûte et le radier pourront avantageusement être réalisés en matières de natures différentes, choisies en fonction des efforts supportés et des conditions d'utilisation.

D'autres modes de mise en place et de fixation des cerces de frettage pourraient également être envisagés. Par exemple, on pourrait utiliser des câbles de précontrainte enroulés en spirale autour des deux éléments rassemblés, sur toute leur longueur, ou même passant par un conduit tubulaire, lui-même enroulé en spirale et dont chaque spire comprendrait deux parties ménagées dans l'épaisseur du béton, l'une dans l'élément supérieur et l'autre dans l'élément inférieur, les orifices de sortie étant répartis le long des bords latéraux des deux éléments de façon à venir deux à deux en coïncidence à la pose de l'élément supérieur sur l'élément inférieur.

Enfin, dans l'exemple décrit ci-dessus, chaque cerce constituant une ceinture de serrage, ainsi que les câbles de précontrainte, entoure complètement le conduit en passant au-dessous du radier. De ce fait, les cerces doivent être fixées sur le radier 2 avant la pose de celui-ci puis relevées pour poser la voûte 1 et enfin rabattues sur celle-ci et fixées sur le dispositif de mise en tension 84.

On pourrait également utiliser des cerces et/ou des câbles de précontrainte en deux parties s'étendant symétriquement de part et d'autre du plan médian P' et placées après la pose de la voûte 1, chaque cerce étant munie à son extrémité inférieure d'un organe d'accrochage susceptible de s'engager sur un organe correspondant ménagé sur la paroi latérale 22 de l'élément inférieur 2.

On notera que dans tous les cas, la pose du conduit peut être réalisée sans intervention de personnel non protégé en fond de fouille.

**Revendications**

1. Conduit enterré destiné à être posé au fond d'une tranchée et recouvert d'un remblai et constitué, en section transversale, de deux éléments superposés, respectivement un élément inférieur (2) comprenant un radier (21) à fond plan relevé sur ses bords par deux parois latérales (22) sensiblement verticales et un élément supérieur (1) de recouvrement s'appuyant sur la partie supérieure des parois latérales (22) de l'élément inférieur (2) par l'intermédiaire d'appuis longitudinaux (3) ménagés le long des bords rectilignes adjacents des deux éléments et placés dans un plan de joint (P1) parallèle au fond (2c) du radier, lesdits appuis longitudinaux étant réalisés de façon à constituer chacun une articulation, caractérisé par le fait que l'élément supérieur (1) constitue une voûte cintrée réalisée de façon à présenter une souplesse suffisante pour se déformer légèrement sous l'action des efforts supportés et que l'élément inférieur (2) est réalisé de façon à résister sans déformation aux efforts transmis par le terrain et par l'élément supérieur (1) les deux éléments étant fixés l'un à l'autre par des moyens de maintien (5) exerçant des efforts de serrage dirigés le long de chaque articulation (3) suivant des directions sensiblement verticales, de façon à permettre un léger pivotement sans glissement des parties d'appui de l'élément supérieur déformable par rapport à l'élément inférieur indéformable.

2. Conduit selon la revendication 1, caractérisé par le fait que chaque appui longitudinal (3) est constitué par une rainure à fond courbe (3) ménagée le long de l'extrémité supérieure de chaque paroi latérale (22) de l'élément inférieur (2) et dans laquelle vient se poser le bord latéral (11) correspondant de l'élément supérieur (1), ce dernier ayant un profil arrondi de rayon de courbure légèrement plus faible que celui du fond de la rainure (3).

3. Conduit selon la revendication 1, caractérisé par le fait que chaque appui longitudinal comprend une nervure (14) ménagée le long de chaque bord latéral de l'élément supérieur (1) et s'engageant avec jeu dans une rainure (31) de plus grande section, ménagée au centre de la face supérieure (23) de chaque paroi latérale de l'élément inférieur (2), un joint (32) en élastomère étant interposé entre les faces d'extrémité (15) de l'élément supérieur et les faces supérieures (23) de l'élément inférieur (2) qui sont écartées par un jeu permettant un léger pivotement de l'articulation.

4. Conduit selon l'une des revendications 1, 2, 3, caractérisé par le fait que les moyens de maintien (5) de l'élément supérieur (1) sur l'élément inférieur (2) sont disposés, le long de chaque appui longitudinal, suivant deux plans (P) sensiblement verticaux.

5. Conduit selon la revendication 1, caractérisé par le fait que les faces internes (2b) des parois latérales (22) de l'élément inférieur (2) et au moins les parties latérales d'appui de la face interne (1a) de l'élément supérieur (1) ont la forme de secteurs cylindriques circulaires centrés dans le plan de joint (P1).

6. Conduit selon l'une des revendications 1 à 5, caractérisé par le fait que l'élément supérieur (1) forme une voûte en plein cintre centrée dans le plan de joint (P1).

7. Conduit selon la revendication 1, caractérisé par le fait que l'épaisseur de l'élément supérieur augmente progressivement de part et d'autre du plan médian depuis la clé (12) jusqu'aux articulations (11), de telle sorte que la voûte présente une souplesse plus grande dans la partie supérieure centrale (12) que dans les parties latérales d'appui (13).

8. Conduit selon la revendication 7, réalisé en béton armé d'un ferraillage, caractérisé par le fait que le ferraillage (7) de la voûte est réalisé de façon à présenter une double nappe dans les parties latérales d'appui (13) et une simple nappe dans la partie supérieure (12).

9. Conduit selon la revendication 1, caractérisé par le fait qu'au moins la partie centrale (12) de l'élément supérieur (4) est réalisée en un béton armé de fibres métalliques.

10. Conduit selon l'une des revendications 1 et 4, caractérisé par le fait que les moyens de maintien sont constitués le long de chaque bord latéral de l'élément supérieur, par une série de tiges de serrage (5) placées dans un plan (P) sensiblement vertical passant au centre de l'articulation longitudinale (3).

11. Conduit selon la revendication 10, caractérisé par le fait que les tiges de serrage sont des boulons (5) passant dans des orifices traversants (41) ménagés dans des bossages latéraux (4) placés vers l'extérieur le long des parties latérales (13) de la voûte (1) et prolongés par des trous borgnes (42) ménagés dans les parois latérales (22) de l'élément inférieur (2), lesdits boulons (5) étant munis d'une tête (50) d'appui sur des épaulements (40) placés à la partie supérieure des bossages (4) et se vissant à leur autre extrémité dans des écrous noyés ou des filetages internes placés dans le fond des trous borgnes (42).

12. Conduit selon la revendication 10, caractérisé par le fait que les tiges de maintien sont constituées de tiges métalliques (5) munies d'aspérités, pénétrant chacune avec jeu dans deux trous alignés respectivement un trou traversant (41) ménagé dans la partie latérale de l'élément supérieur (1) et un trou borgne (42) ménagé dans la paroi latérale de l'élément inférieur (2), lesdits trous étant remplis, après pose des tiges, d'un produit de liaison coulable (52) tel qu'une colle ou un mortier.

13. Conduit selon l'une des revendications 1 et 4, caractérisé par le fait que les moyens de maintien sont placés dans une série de plans (P3) transversaux à l'axe répartis sur la longueur des éléments et sont constitués chacun par au moins une ceinture de serrage (82, 83) entourant complètement au moins l'élément supérieur (1) et prenant appui des deux côtés sur l'élément inférieur (2).

14. Conduit selon la revendication 13, caractérisé par le fait que chaque ceinture de serrage est constituée par au moins un câble (83) entourant complètement le conduit en passant au-dessous du radier (2) et dont les deux extrémités se rejoignent dans le plan médian (P1) du conduit, sur un dispositif d'ancrage (84) placé au-dessus de la clé (12) de l'élément supérieur (1).

15. Conduit selon la revendication 14, caractérisé par le fait que le dispositif d'ancrage (84) des extrémités du câble est muni de moyens de mise en tension du câble sous une tension de précontrainte susceptible de résister à un effort d'ouverture des articulations longitudinales sous l'effet des sollicitations exercées sur le conduit en service.

16. Conduit selon l'une des revendications précédentes constitué d'une série de segments individuels (A, B) comprenant chacun un élément inférieur (2) et un élément supérieur (1) et placés bout à bout les uns à la suite des autres, caractérisé par le fait que le radier de chaque segment (A) est muni à une extrémité (A1) d'un prolongement (7) sur lequel vient se poser la partie adjacente (B2) du radier du segment suivant (B), et comprenant une face supérieure plane (71) placée dans le prolongement de la face inférieure (2c) du radier (2) et une face externe comprenant une partie centrale plane (72) se raccordant par des faces arrondies (73) aux faces externes des parois latérales (22) de l'élément inférieur, que les extrémités adjacentes des deux segments sont recouvertes par un joint d'étanchéité (8) en forme de ruban continu entourant par l'extérieur les faces extérieures adjacentes des éléments supérieurs (1) et les parois latérales (22) des éléments inférieurs (2) et passant entre les faces, respectivement supérieure (71) et inférieure (2c) du prolongement (7) et du radier du segment adjacent (B) et que ledit joint d'étanchéité (8) est recouvert par une cerce (82) constituée d'un profilé de même largeur passant au-dessous dudit prolongement (7) et est appliqué sous pression contre les parois du conduit par un moyen de serrage de la cerce (82).

17. Conduit selon la revendication 16, caractérisé par le fait que la cerce (82) de recouvrement du joint (8) est appliquée sur ce dernier par au moins un câble de serrage (83) passant sur la face externe de la cerce (82) et dont les extrémités se rejoignent sur un moyen (84) d'ancrage et de mise en tension placé au-dessus de la clé (12) de l'élément supérieur (1).

18. Conduit selon la revendication 1, caractérisé par le fait que les moyens de maintien des deux éléments sont constitués par au moins un câble de serrage enroulé en spirale autour du segment de conduit formé par la réunion des deux éléments et sur toute leur longueur.

19. Conduit selon la revendication 18, caractérisé par le fait que le câble de serrage passe dans un conduit tubulaire enroulé en spirale et dont chaque spire comprend deux parties ménagées dans l'épaisseur de la paroi, respectivement, de l'élément supérieur et de l'élément inférieur, et dont les orifices de sortie sont répartis le long des bords latéraux des deux éléments de façon à venir deux à deux en coïncidence à la pose de l'élément supérieur (1) sur l'élément inférieur (2).

20. Conduit selon la revendication 1, caractérisé par le fait que l'élément supérieur et l'élément inférieur sont réalisés en matériaux de natures différentes, déterminées en fonction des efforts supportés et des conditions d'utilisation.

## Claims

1. Buried conduit intended to be laid at the bottom of a trench and covered with an infill, and consisting, in transverse cross-section, of two superposed components which are, respectively, a lower component (2) comprising a flat-bottomed raft (21) with its edges raised by two substantially vertical side walls (22), and an upper covering component (1) bearing on the upper part of the side walls (22) of the lower component (2) by means of lengthwise bearing members (3) arranged along the adjacent rectilinear edges of the two components and placed in a joint plane (P1) parallel to the bottom (2c) of the raft, each of the said lengthwise bearing members being made so as to consist of a joint, characterized in that the upper component (1) forms an arched vault made so as to have sufficient flexibility to distort slightly under the effect of the forces to which it is subjected and in that the lower component (2) is made so as to resist, without distortion, the forces transmitted by the ground and by the upper component (1), the two components being fixed to each other by retaining means (5) exerting clamping forces directed along each joint (3) following substantially vertical directions, so as to allow a slight pivoting of the bearing parts of the distortable upper component without sliding relative to the undistortable lower component.

2. Conduit according to Claim 1, characterized in that each lengthwise bearing member (3) consists of a groove with a curved bottom (3) which is provided along the upper end of each side wall (22) of the lower component (2) and in which the corresponding side edge (11) of the upper component (1) is laid, this side edge having a rounded outline with a radius of curvature which is slightly smaller than that of the bottom of the groove (3).

3. Conduit according to Claim 1, characterized in that each lengthwise bearing member comprises a rib (14) arranged along each side edge of the upper component (1) and engaging with clearance in a groove (31) of larger cross-section, arranged in the centre of the upper face (23) of each side wall of the lower component (2), a seal (32) made of elastomer being placed between the end faces (15) of the upper component and the upper faces (23) of the lower component (2) which are separated by a clearance permitting a slight pivoting of the joint.

4. Conduit according to one of Claims 1, 2 and 3, characterized in that the means for retaining (5) the upper component (1) on the lower component (2) are arranged, along each lengthwise bearing member, following two substantially vertical planes (P).

5. Conduit according to Claim 1, characterized in that the inner faces (2b) of the side walls (22) of the lower component (2) and at least the side bearing portions of the lower face (1a) of the upper component (1) are in the shape of circular cylindrical sectors whose centres lie in the joint plane (P1).

6. Conduit according to one of Claims 1 to 5, characterized in that the upper component (1) forms a fully arched vault whose centre lies in the joint plane (P1).

7. Conduit according to Claim 1, characterized in that the thickness of the upper component increases gradually on both sides of the median plane from the crown (12) to the joints (11), so that the flexibility of the vault is greater in the central upper portion (12) than in the side bearing portions (13).

8. Conduit according to Claim 7, made of steel-reinforced concrete, characterized in that the steel reinforcement (7) of the vault is made so as to form a double layer in the side bearing portions (13) and a single layer in the upper portion (12).

9. Conduit according to Claim 1, characterized in that at least the central portion (12) of the upper component (4) is made of a concrete reinforced with metal fibres.

10. Conduit according to either of Claims 1 and 4, characterized in that the means of retention consist, along each side edge of the upper component, of a series of clamping rods (5) placed in a substantially vertical plane (P) passing through the centre of the lengthwise joint (3).

11. Conduit according to Claim 10, characterized in that the clamping rods are bolts (5) passing through passage orifices (41) provided in the side bosses (4) placed on the outside along the side portions (13) of the vault (1) and extended by blind holes (42) provided in the side walls (22) of the lower component (2), the said bolts (5) being equipped with a head (50) for bearing on shoulders (40) placed in the upper portion of the bosses (4), and their other ends screwing into embedded nuts or into internal threading placed in the depth of the blind holes (42).

12. Conduit according to Claim 10, characterized in that the retaining rods consist of metal rods (5) provided with asperities, each entering, with clearance, in two aligned holes which are, respectively, a passage hole (41) arranged in the side portion of the upper component (1) and a blind hole (42) arranged in the side wall of the lower component (2), the said holes being filled with a pourable bonding product (52) such as a glue or a mortar after the rods have been installed.

13. Conduit according to either of Claims 1 and 4, characterized in that the means of retention are placed in a series of planes (P3) which are transverse to the axis and are distributed over the length of the components and each of which consists of at least one clamping strap (82, 83) completely surrounding at least the upper component (1), and each bearing on both sides of the lower component (2).

14. Conduit according to Claim 13, characterized in that each clamping strap consists of at least one cable (83) completely surrounding the conduit while passing below the raft (2), and both of whose ends are joined together in the median plane (P1) of the conduit, at an anchoring device (84) placed above the crown (12) of the upper component (1).

15. Conduit according to Claim 14, characterized in that the device for anchoring (84) the ends of the cable is equipped with means for tensioning the cable to a prestressing tension capable of withstanding a force tending to open the lengthwise joints under the action of the stresses to which the conduit is subjected in service.

16. Conduit according to one of the preceding claims consisting of a series of individual sections (A, B), each comprising a lower component (2) and an upper component (1) and placed end to end one following another, characterized in that the raft of each section (A) is equipped at one end (A1) with an extension (7) on which the adjacent part (B2) of the raft of the following section (B) is laid, and comprising a planar upper face (71) placed in the extension of the lower face (2c) of the raft (2) and an outer face comprising a planar central portion (72) joined by rounded faces (73) to the outer faces of the side walls (22) of the lower component, in that the adjacent ends of the two sections are covered by a leaktight seal (8) in the shape of a continuous band surrounding, on the outside, the adjacent outer faces of the upper components (1) and the side walls (22) of the lower components (2) and passing between the faces, upper (71) and lower (2c) respectively, of the extension (7) and of the raft of the adjacent section (B), and in that the said leaktight seal (8) is covered by a hoop (82) consisting of a shape of the same width passing below the said extension (7) and is applied under pressure against the walls of the conduit by a means for clamping the hoop (82).

17. Conduit according to Claim 16 characterized in that the hoop (82) for covering the seal (8) is applied to the latter by at least one clamping cable (83) passing over the outer face of the hoop (82) and whose ends are brought together in a means (84) for anchoring and tensioning, placed above the crown (12) of the upper component (1).

18. Conduit according to Claim 1, characterized in that the means for retention of the two components consist of at least one clamping cable wound in a spiral around the length of conduit formed by the coupling of the two components and over their entire length.

19. Conduit according to Claim 18, characterized in that the clamping cable passes through a tubular conduit wound in a spiral and each turn of which comprises two parts arranged within the thickness of the wall, of the upper component and of the lower component respectively, and whose outlet orifices are arranged along the side edges of the two components so that they coincide in pairs when the upper component (1) is laid on the lower component (2).

20. Conduit according to Claim 1, characterized in that the upper component and the lower component are made of materials of different kinds, determined as a function of the forces to which they are subjected and of the conditions of use.

**Patentansprüche**

1. Im Erdboden verlegtes Rohr, welches dazu bestimmt ist, auf den Boden eines Grabens gelegt und mit einer Erdaufschüttung bedeckt zu werden, und welches im Querschnitt aus zwei übereinander angeordneten Elementen besteht, wobei jeweils ein unteres Element (2) eine Sohle (21) mit ebenem Boden aufweist, der an seinen Rändern durch zwei im wesentlichen vertikale Seitenwände (22) hochgezogen ist, und ein oberes Abdeckelement (1) aufweist, welches sich auf dem oberen Teil der Seitenwände (22) des unteren Elementes (2) mittels Längsstützen (3) abstützt, die längs der geraden, an die beiden Elemente angrenzenden Ränder angeordnet und in einer Verbindungsebene (P1) parallel zum Boden (2c) der Sohle plaziert sind, wobei die Längsstützen so ausgeführt sind, daß jede ein Gelenk bildet, dadurch gekennzeichnet, daß das obere Element (1) ein gebogenes Gewölbe bildet, welches derart ausgeführt ist, daß es eine Flexibilität hat, die ausreicht, daß es sich unter der Wirkung von Beanspruchungen leicht deformiert, und daß das untere Element (2) derart ausgeführt ist, daß es ohne Deformierung den Beanspruchungen widersteht, welche durch das Erdreich und durch das obere Element (1) übertragen werden, wobei die zwei Elemente mittels Haltemittel (5) aneinander befestigt sind, welche Spannungsbeanspruchungen ausüben, die längs jedes Gelenks (3) gerichtet sind und im wesentlichen vertikalen Richtungen folgen, um ein leichtes Schwenken ohne Gleiten der Stützteile des deformierbaren oberen Elementes bezüglich dem undeformierbaren unteren Element zu erlauben.

2. Rohr nach Anspruch 1, dadurch gekennzeichnet, daß jede Längsstütze (3) aus einer Einkerbung mit gekrümmtem Boden (3) besteht, die längs des oberen Endes jeder Seitenwand (22) des unteren Elementes (2) angeordnet ist und in welche sich der dem oberen Element (1) entsprechende Seitenrand (11) legt, wobei letzteres ein abgerundetes Profil hat mit einem etwas geringeren Krümmungsradius als der des Bodens der Einkerbung (3).

3. Rohr nach Anspruch 1, dadurch gekennzeichnet, daß jede Längsstütze eine Rippe (14) aufweist, die längs jedes Seitenrandes des oberen Elementes (1) angeordnet ist und mit Spiel in einer Einkerbung (31) größeren Querschnittes in Eingriff steht, welche in der Mitte der oberen Fläche (23) jeder Seitenwand des unteren Elementes (2) angeordnet ist, und eine Verbindung (32) aus Elastomer aufweist, die zwischen den Endflächen (15) des oberen Elementes und den oberen Flächen (23) des unteren Elementes (2) angeordnet sind, die mit Spiel voneinander entfernt sind, welches ein leichtes Schwenken des Gelenkes erlaubt.

4. Rohr nach einem der Ansprüche 1, 2, 3, dadurch gekennzeichnet, daß die Haltemittel (5) für das obere Element (1) auf dem unteren Element (2) längs jeder Längsstütze gemäß zweier im wesentlichen vertikaler Ebenen (P) angeordnet sind.

5. Rohr nach Anspruch 1, dadurch gekennzeichnet, daß die Innenflächen (2b) der Seitenwände (22) des unteren Elementes (2) und mindestens die seitlichen Teile der Stütze der Innenfläche (1a) des oberen Elementes (1) die Form zylindrisch runder Sektoren haben, die in der Verbindungsebene (P1) zentriert sind.

6. Rohr nach einem der Ansprüche 1 bis 5, dadurch gekennzeichnet, daß das obere Element (1) ein Gewölbe mit vollem Bogen bildet, der in der Verbindungsebene (P1) zentriert ist.

7. Rohr nach Anspruch 1, dadurch gekennzeichnet, daß die Dicke des oberen Elementes auf beiden Seiten der Mittelebene vom Scheitel (12) bis zu den Gelenken (11) allmählich derart zunimmt, daß das Gewölbe eine größere Flexibilität im oberen mittleren Teil (12) als in den seitlichen Stützteilen (13) bildet.

8. Rohr nach Anspruch 7, welches aus Beton hergestellt ist, der mit einer Bewehrung armiert ist, dadurch gekennzeichnet, daß die Bewehrung (7) des Gewölbes derart ausgeführt ist, daß sie eine doppelte Schicht in den seitlichen Stützteilen (13) und eine einfache Schicht im oberen Teil (12) bildet.

9. Rohr nach Anspruch 1, dadurch gekennzeichnet, daß mindestens der mittlere Teil (12) des oberen Elementes (4) aus einem Beton besteht, der mit metallischen Fasern armiert ist.

10. Rohr nach einem der Ansprüche 1 und 4, dadurch gekennzeichnet, daß die Haltemittel längs jedes Seitenrandes des oberen Elementes durch eine Reihe von Klemmschäften (5) gebildet sind, die in einer im wesentlichen vertikalen Ebene (P) angeordnet sind, welche durch die Mitte des Längsgelenkes (3) hindurchgeht.

11. Rohr nach Anspruch 10, dadurch gekennzeichnet, daß die Klemmschäfte Bolzen (5) sind, welche durch Queröffnungen (41) hindurchgehen, die in seitlichen erhabenen Teilen (4) angeordnet sind, welche nach außen hin längs der Seitenteile (13) des Gewölbes (1) angeordnet und durch Sacklöcher (41) verlängert sind, die in den Seitenwänden (22) des unteren Elementes (2) angeordnet sind, wobei die Bolzen (5) mit einem Kopf (50) versehen sind zur Abstützung auf Schultern (40), die am oberen Teil der erhabenen Teile (4) angeordnet sind, und sich mit ihrem anderen Ende in versenkte Schrauben oder Innengewinde einschrauben, die im Boden der Sacklöcher (42) angeordnet sind.

12. Rohr nach Anspruch 10, dadurch gekennzeichnet, daß die Halteschäfte aus metallischen Schäften (5) gebildet sind, die mit Unebenheiten versehen sind, wobei jeder mit Spiel durch zwei in Flucht liegende Löcher hindurchgeht bzw. ein durchgehendes Loch (41), welches im seitlichen Teil des oberen Elementes (1) angeordnet ist, und ein Sackloch (42), welches in der Seitenwand des unteren Elementes (2) angeordnet ist, wobei die Löcher nach der Anordnung der Schäfte mit einem gießbaren Verbindungsprodukt (52) gefüllt werden, wie z. B. Leim oder Mörtel.

13. Rohr nach einem der Ansprüche 1 und 4, dadurch gekennzeichnet, daß die Haltemittel in einer Reihe von zur Achse quer liegenden Ebenen (P3) angeordnet sind, welche auf der Länge der Elemente verteilt sind, und jeweils durch mindestens einen Klemmgürtel (82, 83) gebildet werden, der mindestens das obere Element (1) vollständig umgibt und an seinen beiden Seiten auf dem unteren Element (2) Halt findet.

14. Rohr nach Anspruch 13, dadurch gekennzeichnet, daß jeder Klemmgürtel durch mindestens ein Kabel (83) gebildet ist, welches vollständig das Rohr beim Durchlaufen von unterhalb der Sohle (2) umgibt und dessen zwei Enden sich in der Mittelebene (P1) des Rohres auf einer Verankerungsvorrichtung (84) verbinden, die über dem Scheitel (12) des oberen Elementes (1) angeordnet ist.

15. Rohr nach Anspruch 14, dadurch gekennzeichnet, daß die Verankerungsvorrichtung (84) für die Kabelenden mit Spannmitteln für das Kabel versehen ist unter eine Vorspannung, die geeignet ist, einer Öffnungsbelastung der Längsgelenke unter der Wirkung von Beanspruchungen zu widerstehen, die auf das Rohr beim Betrieb ausgeübt werden.

16. Rohr nach einem der vorhergehenden Ansprüche, welches aus einer Reihe von einzelnen Segmenten (A, B) gebildet ist, die jeweils ein unteres Element (2) und ein oberes Element (1) aufweisen und Ende an Ende hintereinander angeordnet sind, dadurch gekennzeichnet, daß die Sohle jedes Segmentes (A) an einem Ende (A1) mit einer Verlängerung (7) versehen ist, auf welcher der angrenzende Teil (B2) der Sohle des folgenden Elementes (B) angeordnet ist, und eine obere Ebene (71) aufweist, die in der Verlängerung der unteren Fläche (2c) der Sohle (2) angeordnet ist, und eine Außenfläche aufweist mit einem ebenen Zentralteil (72), der sich mit gerundeten Flächen (73) an die Außenflächen der Seitenwände (22) des unteren Elementes anschließt, daß die angrenzenden Enden der zwei Segmente durch eine Dichtungsverbindung (8) in Form eines fortlaufenden Bandes abgedeckt sind, welches von außen die äußeren, an die oberen Elemente (1) angrenzenden Flächen und die seitlichen Wände (22) der unteren Elemente (2) umgibt und welches zwischen den Flächen, jeweils der oberen (71) und unteren (2c) der Verlängerung (7) und der Sohle des benachbarten Segmentes (B) durchläuft, und daß diese Dichtungsverbindung (8) durch eine Umrißschablone (82) bedeckt ist, die durch einen Formstahl derselben Breite gebildet ist, der unterhalb der Verlängerung (7) durchläuft und unter Druck gegen die Wände des Rohres durch ein Klemmmittel der Umrißschablone (82) aufgebracht ist.

17. Rohr nach Anspruch 16, dadurch gekennzeichnet, daß die Umrißschablone (82) für die Abdeckung der Verbindung (8) auf letztere durch mindestens ein Klemmkabel (83) aufgebracht ist, welches auf der Außenfläche der Umrißschablone (82) läuft und deren Enden sich auf einem Verankerungs- und Spannmittel (84) verbinden, welches über dem Scheitel (12) des oberen Elementes (1) angeordnet ist.

18. Rohr nach Anspruch 1, dadurch gekennzeichnet, daß die Haltemittel für die zwei Elemente durch mindestens ein Klemmkabel gebildet sind, welches spiralig um das Rohrsegment, welches durch die Vereinigung der zwei Elemente gebildet ist, und auf seiner ganzen Länge aufgewickelt ist.

19. Rohr nach Anspruch 18, dadurch gekennzeichnet, daß das Klemmkabel in einer rohrförmigen Leitung verläuft und spiralig gewickelt ist und dessen jeweilige Wicklung zwei Teile aufweist, die in der Dicke der Wand angeordnet sind, jeweils des oberen Elementes und des unteren Elementes, und deren Ausgangsöffnungen längs der Seitenränder der zwei Elemente derart verteilt sind, daß beim Aufbringen des oberen Elementes (1) auf das untere Element (2) zwei auf zwei Elemente deckungsgleich werden.

20. Rohr nach Anspruch 1, dadurch gekennzeichnet, daß das obere Element und das untere Element aus Materialien unterschiedlicher Eigenschaften hergestellt sind, die in Funktion der Beanspruchungen und der Benutzungsbedingungen bestimmt sind.

FIG.1

FIG.2

FIG.4

FIG.3

FIG.5

FIG.6

FIG.7